# EUROPEAN PATENT SPECIFICATION

(11) **EP 1 509 718 B1**
(45) Date of publication and mention of the grant of the patent: **17.01.2007**
(21) Application number: 03736382.7
(22) Date of filing: 12.05.2003
(51) Int. Cl.: F16L 5/00, F16L 5/02, F16L 5/14, H02G 3/22

(54) **COMPRESSION UNIT**
DRUCKEINHEIT
UNITE DE COMPRESSION

(30) Priority: 05.06.2002 SE 0201704
(43) Date of publication of application: 02.03.2005
(73) Proprietor: Roxtec AB, 371 23 Karlskrona (SE)
(72) Inventor: KREUTZ, Tomas, S-371 60 Lyckeby (SE)
(74) Representative: Karlsson, Leif Gunnar Börje
(86) International application number: PCT/SE2003/000772
(87) International publication number: WO 2003/104701

(56) References cited:
- EP-A1- 0 612 946
- EP-A1- 1 150 408
- WO-A1-95/31026
- DE-C1- 4 340 343
- US-A- 4 079 559

## Description

### Technical Field

The present invention concerns a frame for cable entries, pipe penetrations or the like. More specifically the invention concerns a compression unit to be used in said frame.

### Prior Art

Different frames of this kind are widely used today. The frames are parts of systems used to seal at a cable entry, pipe penetration etc. In addition to the frame the systems normally comprises further elements to be placed tightly surrounding the cables etc. Systems of this kind are used in many different environments, such as for cabinets, technical shelters, junction boxes and machines. They are used in different industrial environments, such as automotive, telecom, power generation and distribution, as well as marine and offshore.

The seals may have to seal against fluid, gas, fire, rodents, termites, dust, moisture etc. The seal may receive cables for electricity, communication, computers etc. or pipes for different gases or liquids such as water, compressed air, hydraulic fluid and cooking gas.

In a common type of frames of this kind as shown in WO-A-95/31026, EP-A-0 612 946 and DE-C-43 40 343, for example, rather intricate compression units are used to put pressure on the separate units receiving cables, pipes etc. The pressure is needed to give a positive sealing. The compression units often comprise a number of different parts, including screws or the like used to displace two or more parts in relation to each other, which parts may have the form of wedges. These more complex compression units are needed, when e.g. the demands regarding maximal pressure difference on each side of a wall are relatively high. However, if the demands are not that severe such compression units may be felt as too complicated both regarding manufacture and handling. Thus, there is a need for a more simple, but yet reliable compression unit, which may be used when the demands are somewhat lower.

### Summary of the Invention

In view of the above, the compression unit of the present invention is mainly intended for frames having medium or lower demands on the sealing, regarding the pressure it can withstand.

One object of the present invention is to arrange a simplified but yet robust compression unit for a frame, which compression unit should be relatively easy to use. A further object is that the compression unit should have as few parts as possible, simplifying both the production and general handling of the compression unit. Furthermore, the compression unit should be possible to use with different frames. It is also an advantage if the compression unit has small or no risk of malfunction.

According to the present invention a compression unit for a frame, receiving one or more separate units for cable entries, pipe penetrations etc., is arranged. Said compression unit comprises a compression plate to be received turnable in the frame. The compression plate and frame are connected by means of protrusions and grooves.

Further objects and advantages of the present invention will be obvious for a person skilled in the art, when reading the detailed description below of one at present preferred embodiment of the present invention.

### Brief Description of the Drawings

The invention will now be described further below, by way of an example and with reference to the drawings below. In the drawings:

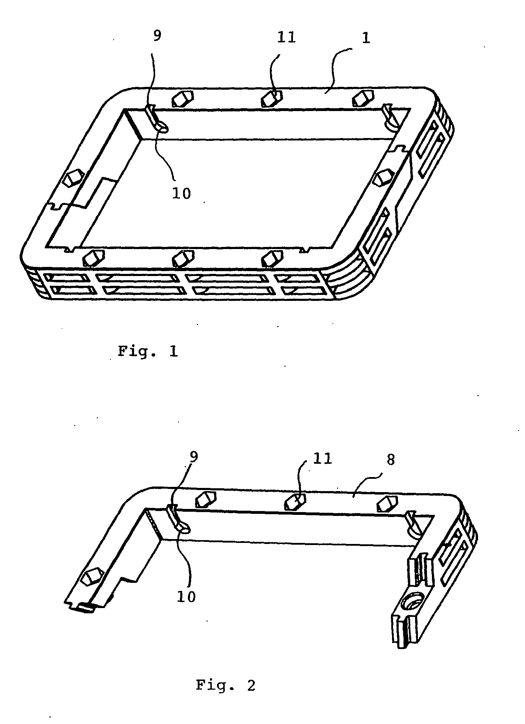

Fig. 1 is a perspective view of a frame according to the present invention;
Fig. 2 is a perspective view of a part used for forming the frame of Fig. 1;
Fig. 3 is a perspective view of a compression plate to be received in the frame of Fig. 1;
Fig. 4 is a perspective view of a cover to be used with a compression plate of Fig. 3;
Fig. 5 is a perspective view of the cover of Fig. 4 taken from the opposite direction;
Fig. 6 illustrates in cross section a line of operations for mounting of a compression plate in the frame;
Fig. 7 is a front view indicating a frame according to the present invention in use;
Fig. 8 is a perspective view of an alternative compression plate according to the invention;
Fig. 9 is a part view of an alternative frame according to the present invention; and
Fig. 10 is a perspective view of an alternative compression plate according to the present invention.

### Detailed Description of a Preferred Embodiment

The expressions "horizontal", "vertical", "upper", "lower" and similar expressions, as used in this description, are with reference to the directions as shown in the enclosed Figs. A person skilled in the art realises that the frame may have any orientation in use.

The present invention is used in connection with frames 1 for receiving one or more separate units 2 in the form of cable entries, pipe penetrations etc. The frame 1 is used to bring cables, pipes etc. through an opening of a wall, ceiling etc. in a sealed way.

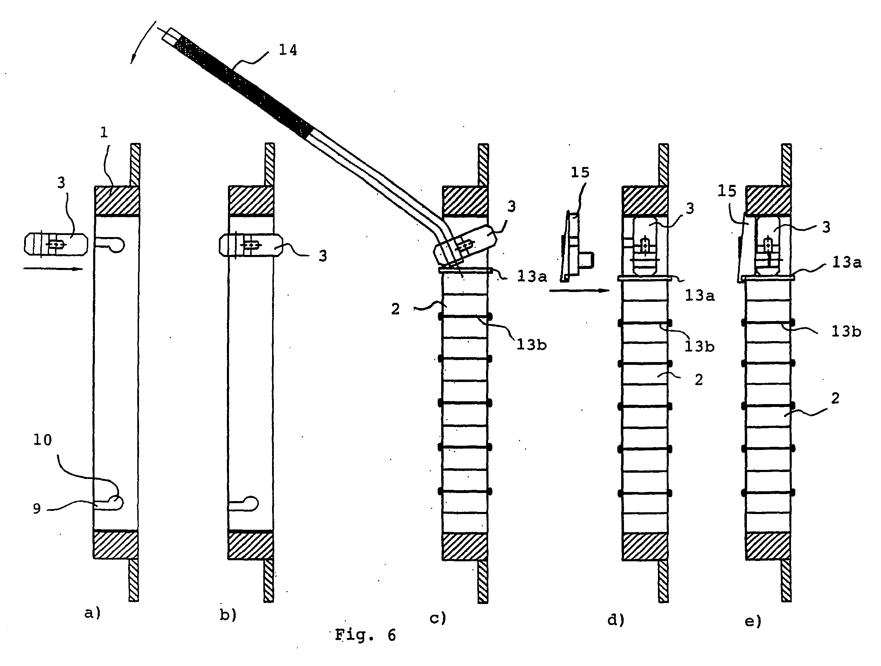

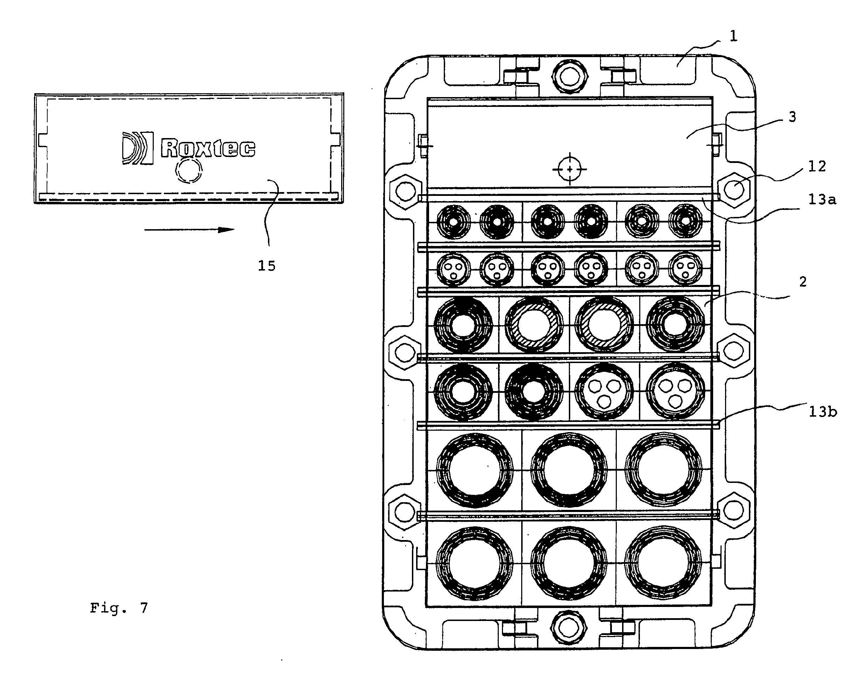

In the embodiment shown in the enclosed drawings, the frame 1 is formed of two frame parts 8. Even tough the frame 1 is shown as made of two parts 8, the invention is not limited to such frames. A person skilled in the art realises that it is of no importance for the invention as such if the frame 1 is made of only one single, two or more parts. As indicated in Figs. 6 and 7 the frame may have a flange for abutment against a wall or the like. The frame parts 8 of the shown embodiment are brought together and fixed to one side of the wall, ceiling or the like. The frame 1 is furnished with a number of through holes 11 for receiving suitable fastening means. In the shown embodiment bolts 12 are used as fastening means. A person skilled in the art realises that any fastening means giving a secure fixation of the frame 1 to the wall may be used. Thus, it is possible to use rivets, welding, soldering, glue etc. or a combination of different fastening means.

Inside the frame 1 a number of separate units 2 are received. Said separate units 2 have the form of cable entries, pipe penetrations etc. The separate units 2 are made of an elastic material, giving a sealing effect when put under pressure. Between different rows of separate units 2, partitions 13a, 13b are arranged. The partitions 13a, 13b are arranged in such a way within the frame 1 that the partitions may slide in relation to the frame 1. Furthermore, a compression plate 3 is received in the frame 1. The uppermost partition 13a, i.e. the one in contact with the compression plate 3 is often made stronger than the rest of the partitions 13b. This is normally achieved in that said uppermost partition 13a is made thicker than the rest of the partitions 13b.

The compression plate 3 has a generally rectangular form in the shown embodiment. On each short side of the compression plate 3 a protrusion 5 is arranged. Each protrusion 5 is formed with long and short sides aligned with the extension of the short sides of the compression plate 3. The long sides of the compression plate 3 have bevels 7. Furthermore, the compression plate has an opening 6, which preferably is a through opening 6. The compression plate 3 may be formed of any material plastic, metal etc. giving enough stiffness. The exact form of the compression plate 3 may vary but is adapted to the form of the frame 1, which is to receive the compression plate 3.

The protrusions 5 of the compression plate 3 are to co-operate with grooves 9, 10 of the frame 1. The grooves of the frame 1 have a straight introduction part 9, which goes over into a rounded part 10. The grooves 9, 10, as shown in the enclosed Figs., are not through grooves and, thus, are ended by the rounded part 10. However, in alternative embodiments (not shown) the grooves may be through grooves, allowing insertion of a compression plate 3 from either side of the frame. For such through grooves the rounded part 10 is normally placed in the middle, with straight parts 9 on both sides. The dimensions of the protrusions 5 of the compression plate 3 and the grooves 9, 10 of the frame 1 are such that the compression plate 3 may be inserted into the frame 1 and then turned. Furthermore, the round parts 10 of the grooves have a locking function, i.e. when the compression plate 3 is in a vertical position it is hindered from going along the groove 9, 10. The compression plate 3 is introduced into the frame 1 directed mainly perpendicular to the general extension of the frame 1. The grooves 9, 10 are arranged at the upper part of the frame 1. The grooves 9, 10 are positioned to enable for the compression plate 3 to be pressed against the upper vertical part of the frame 1, when the compression plate 3 is turned in the frame 1. In that the compression plate 3 abuts and is pressed against the upper part of the frame 1, the compression plate 3 will transfer that pressure to the separate units 2 of the frame 1, placed below said compression plate 3.

In an alternative embodiment the grooves of the frame 1' receiving the compression plate 3' have a different form. For said grooves there is no connection between the straight part 9' and the rounded part 10' of the grooves. These types of grooves are intended for use with relatively flexible frames 1'. To mount the compression plate 3' the protrusions 5' of the plate is first introduced in the straight part 9' of the grooves. To bring the protrusions 5' into the rounded part 10' of the grooves, the frame 1' is flexed just enough to allow the protrusions 5' to pass from the straight to the rounded parts 9', 10' of the grooves. With the protrusions 5' in the rounded parts 10' of the grooves the compression plate 3' may be turned in the same way as described above. In a further alternative embodiment the grooves have no straight part, in which case the protrusions 5' of the plate 3' are brought directly into the rounded parts by flexing the frame. The protrusions 5' of the compression plates 3' often have a circular form when co-operating with grooves having separated straight and rounded parts.

A person skilled in the art realises that the exact form and position of the protrusions 5 and grooves 9, 10 may vary. The only demand is that it should be possible to introduce the compression plate 3 in the frame 1 and then to turn the compression plate 3 to a position in which it puts pressure on the separate units 2 in the frame 1. As stated above the compression plate 3 should be locked in a vertical position by the protrusions 5 and grooves 9, 10.

Furthermore, a cover 15 is arranged, which is to be placed over the compression plate 3, in order to seal the area of the compression plate 3 in the frame 1. The cover 15 has the same general rectangular form as the compression plate 3. The side of the cover 15 intended to be faced outwards is slightly inclined and, thus, the short sides of the cover 15 have one narrow end 16 and one broad end 17. At the broad end 17 of the cover 15 a notch 18 is formed, which notch 18 goes along the lower long side of the cover 15. The notch 18 is to be placed along the uppermost partition 13a. On one side of the cover 15 a knurl 19 is provided, which is to be received in the opening 6 of the compression plate 3. The cover 15 has also a protruding rim and protrusions 20, which protrusions 20 are to be received in the straight parts 9 of the grooves. The notch 18, the rim, the knurl 19 and the protrusions 20 of the cover 15 contribute to the fixation of said cover 15 to the frame 1. The cover 15 is normally formed of rubber or other elastic material.

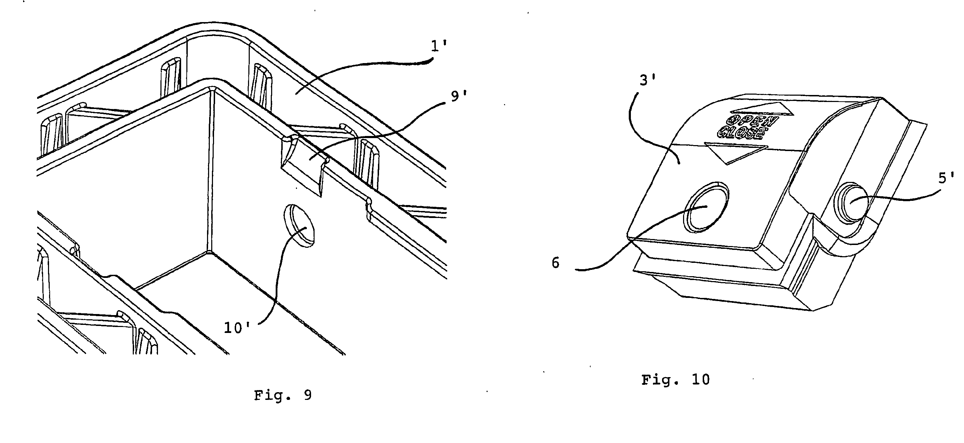

In an alternative embodiment, indicated in Fig. 8, the compression plate 4 also fulfils the function of the cover. The compression plate 4 according to the embodiment of Fig. 8 has the same general form as the previously described compression plate 3. Furthermore, it has protrusions 5, an opening 6 for a tool, and bevelled sides 7. The difference to the previously described compression plate 3 is that the compression plate 4 is furnished with sealings 21, 22. One sealing 21 goes in the middle of all sides that are to be in contact with the frame 1 or parts 13a received in the frame when the compression plate 4 is in a vertical position. Furthermore, one sealing 22 is placed in a circle around each protrusion 5. The sealings 21, 22 may be received in grooves in the compression plate 4. However, it is also possible to fix the sealings 21, 22 directly on the surfaces of the compression plate 4. Thus, in this embodiment there is no need for a cover. However, the opening 6 is to be covered by a lock or the like (not showed).

When the compression plate 3, 4 is introduced into the frame 1 (Fig. 6a), the protrusions 5 are first going in the straight part 9 of the grooves (Fig. 6b). As long as the protrusions 5 are in the straight part 9 of the grooves it is not possible to turn the compression plate 3. For the embodiments having separated rounded and straight parts the compression plate may normally be turned in the straight part. When the protrusions 5 have reached the rounded parts 10 of the groove the compression plate may be turned. As the compression plate 10 is turned it will put pressure on the separate units 2 in the frame and it is also locked from moving along the grooves. The pressure will be transferred from the uppermost partition 13a via the separate units 2 and further partitions 13b to the lowermost row of separate units 2. To be able to turn the compression plate 3, 4 into a mainly vertical position, i.e. parallel with the main extension of the frame 1, a tool 14 is placed in the opening 6 (Fig. 6c). The tool 14 may simply be a rod, preferably having a slightly angled end as shown in Fig. 6. However, a person skilled in the art realises that any tool may be used, as long as it is possible to give enough force to turn the compression plate 3, 4. The bevelled 7 sides of the compression plate 3, 4 makes it easier to turn the compression plate 3, 4.

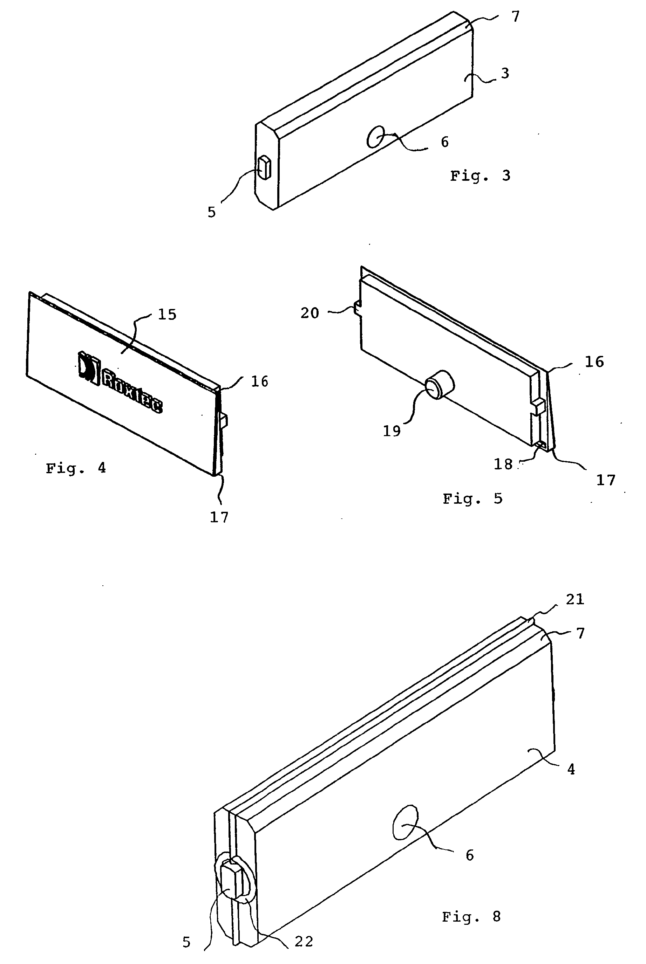

When the compression plate 3 according to the embodiment of Fig. 3 is in the correct position, the cover 15 is placed in the frame 1 covering the compression plate 3 (Fig. 6d). The cover 15 is placed with the knurl 19 in the opening 6 of the compression plate 2 and the protrusions 20 in the grooves 9 of the frame 1. The notch 18 of the cover 15 is placed on the uppermost partition 13a. Thus, when it has been placed on the compression plate 3, the cover 15 will seal the compression plate 3 in relation to the frame 1 (Fig. 6e).

If the frame 1 is to receive new cables, pipes etc., the above-indicated sequence of operations is reversed. Thus, the cover 15, if used, is first removed. Then the compression plate 3, 4 is turned to a generally horizontal position, whereby the protrusions 5 will turn in the rounded part 10 of the groove. When the compression plate 3, 4 has been turned the pressure on the separate units 2 will be relieved. The partition 13a, 13b placed above the separate unit 2, which is to receive a new cable, pipe or the like, may be slid upwards giving access to the desired unit 2. The separate unit 2 is taken out the cable, pipe or the like is then introduced and the separate unit is adapted to the new cable, pipe or the like. In the shown embodiment this is done in that an appropriate number of sheets are peeled from the separate unit 2. Thereafter, the unit 2 is place in the frame surrounding the cable, pipe or the like. Finally, the compression plate 3 is once again turned to a vertical position putting pressure on the separate units 2 received in the frame 1. By means of the induced pressure the separate units 2 will seal the cables, pipes etc. The same line of operations are done if one is to replace one or more of the separate units 2, either due to damage, that the dimensions are to be altered etc.

## Claims

1. A compression unit for a frame (1, 1'), receiving one or more separate units (2) for cable entries, pipe penetrations etc., **characterized in that** the compression unit comprises a compression plate (3, 3', 4) to be received turnable in the frame (1) and that the compression plate (3, 3', 4) and frame (1, 1') are connected by means of protrusions (5, 5') and grooves (9, 10, 9',10').

2. The compression unit of claim 1, **characterized in that** protrusions (5, 5') are arranged on the short sides of the compression plate (3, 3', 4) and that the frame has grooves (9, 10, 9', 10') for co-operation with the protrusions (5, 5') of the compression plate (3, 3', 4).

3. The compression unit of claim 2, **characterized in that** the grooves have a first straight part (9, 9'), which opens towards one side of the frame (1, 1'), and a second rounded part (10, 10'), ending at a distance from the edge of the frame (1, 1').

4. The compression unit of claim 3, **characterized in that** the protrusions (5) of the compression plate (3, 4) and the grooves (9, 10) of the frame (1) are adapted to each other, in such a way that the compression plate (3, 4) cannot be turned when the protrusions (5) are in the straight parts (9) of the grooves, while the compression plate (3, 4) may be turned when the protrusions (5) are in the rounded parts (10) of the groove.

5. The compression unit of claim 2 or 3, **characterized in that** the frame (1') is flexible enough to allow the protrusions (5') of the compression plate (3') to be introduced into a rounded part (10') of the grooves by flexing of the frame (1').

6. The compression unit of any of the previous claims, **characterized in that** the compression plate (3, 3', 4) is received in the frame (1, 1') in such a way, that it will abut one side of the frame (1, 1') and thereby put pressure on the separate units (2) received in the frame (1, 1'), when the compression plate (3, 3', 4) is turned in the frame (1, 1') to a position generally aligned with the general extension of the frame (1, 1').

7. The compression unit of any of the previous claims, **characterized in that** the compression plate (3, 3', 4) has a rectangular extension; that the long sides of the plate (3, 3', 4) are bevelled (7); and that the compression plate (3, 3', 4) is made of a plastic, metallic or other material giving enough stiffness to put the separate units (2) under pressure.

8. The compression unit of any of the previous claims, **characterized in that** partitions (13a, 13b) are placed in the frame (1, 1') between rows of one or more separate units (2) of cable entries, pipe penetrations etc. and that the partitions (13a, 13b) are received in such a way in the frame (1, 1') that they may slide along the frame (1,1').

9. The compression unit of any of the previous claims, **characterized in that** the compression plate (3, 3', 4) has at least one opening (6) for receiving a tool (14) for turning the compression plate (3, 3', 4) within the frame (1, 1').

10. The compression unit of any of the previous claims, **characterized by** a cover (15), which is to be placed in the frame (1) covering the compression plate (3).

11. The compression unit of claim 10, **characterized in that** the cover (15) has an knurl (19) on one side for co-operation with the opening (6) of the compression plate (3) and a notch (18) along one lower side of the cover (15); and that one side of the cover (15) is inclined, having the broader end (17) in connection with the notch (18).

12. The compression unit of claim 10 or 11, **characterized in that** the cover (15) is made of rubber.

13. The compression unit of any of the claims 1 to 9, **characterized in that** sealings (21, 22) are arranged on the compression plate (4), which sealings (21, 22) are to abut the frame (1) and parts (13a) received in the frame when the compression plate (4) is in a compressing position.

## Patentansprüche

1. Eine Druckeinheit für einen Rahmen (1, 1') zur Aufnahme einer oder mehrerer separater Einheiten (2) für Kabeldurchführungen, Rohrdurchführungen etc., **dadurch gekennzeichnet, daß** die Druckeinheit eine Druckplatte (3, 3', 4) umfaßt, die drehbar in den Rahmen (1) einsetzbar ist, und daß die Druckplatte (3, 3', 4) und der Rahmen (1, 1 ') über Vorsprünge (5, 5') und Nuten (9, 10, 9', 10') miteinander verbunden sind.

2. Die Druckeinheit gemäß Anspruch 1, **dadurch gekennzeichnet, daß** Vorsprünge (5, 5 ') an den kurzen Seiten der Druckplatte (3, 3', 4) angeordnet sind und daß der Rahmen Nuten (9, 10, 9', 10') für das Zusammenwirken mit den Vorsprüngen (5, 5 ') der Druckplatte (3, 3', 4) aufweist.

3. Die Druckeinheit gemäß Anspruch 2, **dadurch gekennzeichnet, daß** die Nuten einen ersten geraden Teil (9, 9') aufweisen, der sich zu einer Seite des Rahmens (1, 1') hin öffnet, und einen zweiten abgerundeten Teil (10, 10'), der in einem Abstand vom Rand des Rahmens (1, 1 ') endet.

4. Die Druckeinheit gemäß Anspruch 3, **dadurch gekennzeichnet, daß** die Vorsprünge (5) der Druckplatte (3, 4) und die Nuten (9, 10) des Rahmens (1) derart aneinander angepaßt sind, daß die Druckplatte (3, 4) nicht gedreht werden kann, wenn sich die Vorsprünge (5) in den geraden Teilen (9) der Nuten befinden, während die Druckplatte (3, 4) gedreht werden kann, wenn sich die Vorsprünge (5) in den abgerundeten Teilen (10) der Nut befinden.

5. Die Druckeinheit gemäß Anspruch 2 oder 3, **dadurch gekennzeichnet, daß** der Rahmen (1') genügend flexibel ist, um zu ermöglichen, daß die Vorsprünge (5') der Druckplatte (3') durch Verformen des Rahmens (1') in einen abgerundeten Teil (10 ') der Nuten eingesetzt werden können.

6. Die Druckeinheit gemäß einem der vorhergehenden Ansprüche, **dadurch gekennzeichnet, daß** die Druckplatte (3, 3', 4) derart in den Rahmen (1, 1') eingesetzt ist, daß sie an einer Seite des Rahmens (1, 1 ') anliegt und **dadurch** Druck auf die separaten Einheiten ausübt (2), die im Rahmen (1, 1') angeordnet sind, wenn die Druckplatte (3, 3', 4) im Rahmen (1, 1 ') in eine Position gedreht wird, die im allgemeinen mit der allgemeinen Erstreckung des Rahmens ausgerichtet ist (1, 1').

7. Die Druckeinheit gemäß einem der vorhergehenden Ansprüche, **dadurch gekennzeichnet, daß** die Druckplatte (3, 3', 4) eine rechteckigen Ansatz aufweist; daß die langen Seiten der Platte (3, 3', 4) (7) abgeschrägt sind; und daß die Druckplatte (3, 3', 4) von einem Kunststoff-, einem metallischen oder einem anderen Material besteht, das genügend Steifheit aufweist, um die separaten Einheiten (2) unter Druck zu setzen.

8. Die Druckeinheit gemäß einem der vorhergehenden Ansprüche, **dadurch gekennzeichnet, daß** die Fächer (13a, 13b) im Rahmen (1, 1') zwischen Reihen aus einer oder mehreren separaten Einheiten (2) von Kabeldurchführungen, Rohrdurchführungen etc. angeordnet sind und daß die Fächer (13a, 13b) derart im Rahmen (1, 1') gehaltert sind, daß sie entlang des Rahmens (1,1 ') verschieblich sind.

9. Die Druckeinheit gemäß einem der vorhergehenden Ansprüche, **dadurch gekennzeichnet, daß** die Druckplatte (3, 3', 4) wenigstens eine Öffnung (6) für die Aufnahme eines Werkzeuges (14) für das Drehen der Druckplatte (3, 3', , 4) innerhalb des Rahmens (1, 1') aufweist.

10. Die Druckeinheit gemäß einem der vorhergehenden Ansprüche, **gekennzeichnet durch** eine Abdeckung (15), die in den Rahmen (1) gelegt werden kann und die die Druckplatte (3) abdeckt.

11. Die Druckeinheit gemäß Anspruch 10, **dadurch gekennzeichnet, daß** die Abdeckung (15) auf einer Seite ein Rändelrad (19) für das Zusammenwirken mit der Öffnung (6) der Druckplatte (3) aufweist und eine Kerbe (18) entlang einer unteren Seite der Abdeckung (15); und daß eine Seite der Abdeckung (15) geneigt ist, wobei ihr breiteres Ende (17) in Verbindung mit der Kerbe (18) steht.

12. Die Druckeinheit gemäß Anspruch 10 oder 11, **dadurch gekennzeichnet, daß** die Abdeckung (15) aus Gummi besteht.

13. Die Druckeinheit gemäß einem der Ansprüche 1 bis 9, **dadurch gekennzeichnet, daß** an der Druckplatte (4) Dichtungen (21, 22) angeordnet sind, wobei die Dichtungen (21, 22) derart ausgebildet sind, daß sie am Rahmen (1) und an Teilen (13a), die im Rahmen angeordnet sind, anliegen, wenn sich die Druckplatte (4) in einer zusammengedrückten Position befindet.

## Revendications

1. Unité de compression pour un cadre (1, 1') recevant une ou plusieurs unités séparées (2) pour des entrées de câble, des pénétrations de tuyaux, etc. **caractérisée en ce que** l'unité de compression comprend une plaque de compression (3, 3', 4) destinée à être reçue de façon à pouvoir tourner dans le cadre (1) et **en ce que** la plaque de compression (3, 3', 4) et le cadre (1, 1') sont reliés au moyen de saillies (5, 5') et d'encoches (9, 10, 9', 10').

2. Unité de compression selon la revendication 1 **caractérisée en ce que** des saillies (5, 5') sont disposées sur les petits côtés de la plaque de compression (3, 3', 4) et **en ce que** le cadre a des encoches (9, 10, 9', 10') destinées à coopérer avec les saillies (5, 5') de la plaque de compression (3, 3', 4).

3. Unité de compression selon la revendication 2 **caractérisée en ce que** les encoches ont une première partie droite (9, 9') qui s'ouvre sur un côté du cadre (1, 1') et une deuxième partie arrondie (10, 10') qui se termine à une certaine distance du bord du cadre (1, 1').

4. Unité de compression selon la revendication 3 **caractérisée en ce que** les saillies (5) de la plaque de compression (3, 4) et les encoches (9, 10) du cadre (1) sont adaptées les unes aux autres, de telle sorte que la plaque de compression (3, 4) ne peut pas être tournée quand les saillies (5) sont dans les parties droites (9) des encoches, alors que la plaque de compression (3, 4) peut être tournée quand les saillies (5) sont dans les parties arrondies (10) de l'encoche.

5. Unité de compression selon la revendication 2 ou 3 **caractérisée en ce que** le cadre (1') est assez flexible pour permettre aux saillies (5') de la plaque de compression (3') d'être introduites dans une partie arrondie (10') des encoches par une flexion du cadre (1').

6. Unité de compression selon l'une quelconque des revendications précédentes **caractérisée en ce que** la plaque de compression (3, 3', 4) est admise dans le cadre (1, 1') de telle façon qu'elle va buter sur un côté du cadre (1, 1') et de ce fait imprimer une pression sur les unités séparées (2) admises dans le cadre (1, 1') quand la plaque de compression (3, 3', 4) est tournée dans le cadre (1, 1') jusqu'à une position généralement alignée avec l'extension générale du cadre (1, 1').

7. Unité de compression selon l'une quelconque des revendications précédentes **caractérisée en ce que** la plaque de compression (3, 3', 4) a une extension rectangulaire ; **en ce que** les côtés longs de la plaque (3, 3' , 4) sont biseautés (7) ; et **en ce que** la plaque de compression (3, 3', 4) est faite de plastique, de métal ou d'un autre matériau qui donne assez de rigidité pour mettre les unités séparées (2) sous pression.

8. Unité de compression selon l'une quelconque des revendications précédentes **caractérisée en ce que** des segmentations (13a, 13b) sont placées dans le cadre (1, 1') entre des rangées d'une ou plusieurs unités séparées (2) d'entrées de câbles, de pénétrations de tuyaux, etc. et **en ce que** les segmentations (13a, 13b) sont admises de telle manière dans le cadre (1, 1') qu'elles peuvent glisser le long du cadre (1, 1').

9. Unité de compression selon l'une quelconque des revendications précédentes **caractérisée en ce que** la plaque de compression (3, 3', 4) a au moins une ouverture (6) pour recevoir un outil (14) destiné à faire tourner la plaque de compression (3, 3', 4) à l'intérieur du cadre (1, 1').

10. Unité de compression selon l'une quelconque des revendications précédentes **caractérisée par** un couvercle (15) destiné à être placé dans le cadre (1) pour couvrir la plaque de compression (3).

11. Unité de compression selon la revendication 10 **caractérisée en ce que** le couvercle (15) a une molette (19) d'un côté pour coopérer avec l'ouverture (6) de la plaque de compression (3) et une encoche (18) le long d'un coté inférieur du couvercle (15), et **en ce qu'**un côté du couvercle (15) est incliné en ayant son extrémité la plus large (17) reliée à l'encoche (18).

12. Unité de compression selon la revendication 10 ou 11 **caractérisée en ce que** le couvercle (15) est en caoutchouc.

13. Unité de compression selon l'une quelconque des revendications 1 à 9 **caractérisée en ce que** des joints (21, 22) sont disposés sur la plaque de compression (4), lesquels joints (21, 22) sont destinés à buter sur le cadre (1) et des parties (13a) admises dans le cadre quand la plaque de compression (4) est dans une position de compression.
